# EUROPEAN PATENT SPECIFICATION

(11) **EP 0 405 861 B1**
(45) Date of publication and mention of the grant of the patent: **16.08.1995**
(21) Application number: 90306859.1
(22) Date of filing: 22.06.1990
(51) Int. Cl.: G06F 11/14, G06F 11/20, G06F 11/16

(54) **Transferring data in a digital data processing system**
Datenübertragung in einem Digitaldatenverarbeitungssystem
Transfert de données dans un système de traitement de données numériques

(30) Priority: 30.06.1989 US 374253
(43) Date of publication of application: 02.01.1991
(73) Proprietor: DIGITAL EQUIPMENT CORPORATION, Maynard, Massachusetts 01754 (US)
(72) Inventor: Davis, Scott H., Merrimack, New Hampshire 03054 (US); Goleman, William L., Nashua, New Hampshire 03062 (US); Zahrobsky, James A., Colorado Springs, Colorado 80918 (US); Thiel, David W., Amherst, New Hampshire 03031 (US); Bean, Robert G., Colorado Springs, Colorado 80919 (US)
(74) Representative: Goodman, Christopher

(56) References cited:
- EP-A- 0 303 856
- GB-A- 2 188 177
- RESEARCH DISCLOSURES no. 296, December 1988, New York, N.Y., US; RD 29647 (ANONYMOUS): "Data Integrity During Mirror Synchronisation"

## Description

### BACKGROUND OF THE INVENTION

This invention relates to a system for transmitting data between two storage devices associated with a digital data processing system. The preferred embodiment is described in connection with a system for establishing and maintaining one or more duplicate or "shadow" copies of stored data to thereby improve the availability of the stored data.

A typical digital computer system includes one or more mass storage subsystems for storing data (which may include program instructions) to be processed. In typical mass storage subsystems, the data is actually stored on disks. Disks are divided into a plurality of tracks, at selected radial distances from the center, and sectors, defining particular angular regions across each track, with each track and set of one or more sectors comprising a block, in which data is stored.

Since stored data may be unintentionally corrupted or destroyed, systems have been developed that create multiple copies of stored data, usually on separate storage devices, so that if the data on one of the devices or disks is damaged, it can be recovered from one or more of the remaining copies. Such multiple copies are known as the shadow set. In a shadow set, typically data that is stored in particular blocks on one member of the shadow set is the same as data stored in corresponding blocks on the other members of the shadow set. It is usually desirable to permit multiple host processors to simultaneously access (i.e., in parallel) the shadow set for read and write type requests ("I/O" requests).

A new storage device or "new member" is occasionally added to the shadow set. For example, it may be desirable to increase the number of shadow set members to improve the data availability or it may be necessary to replace a shadow set member that is or has been damaged. Because all shadow set members contain the same data, when adding a new member, all of the data stored on the active members must be copied to the new member.

In Research Disclosures no. 296, December 1988; RD29647: "Data Integrity during Mirror Synchronization" there is described a system for copying in portions the contents of a "good" storage device to a "bad" storage device. When the storage devices receive an I/O request, the system compares the section of data to be affected by the I/O request to the portion of data being transferred from the good to the bad storage device. If there is no overlap, the I/O request is processed as usual. Otherwise, the synchronization of data between the storage devices is stopped and restarted after the I/O request is processed. Unlike the present invention, the system interrupts and restarts data transfers to process interfering I/O requests.

### Summary of the Invention

The invention generally features a method and apparatus for transferring data between two storage media according to claims 1 and 15, which are used in an illustrative embodiment to transfer data between two storage media in a shadow set, the storage media being accessible to one or more host processors. The method of the preferred embodiment includes the steps of: A. receiving a command from one of the host processors, the command specifying data to be transferred from a first storage medium to a second storage medium; B. transferring the data specified in the command received from the host from the first storage medium to the second storage medium in a series of subtransfers, each of the subtransfers transferring a portion of the data; and C. processing one or more I/O requests to the shadow set received from one or more host processors by, for each received I/O request: a. implementing the I/O request if the I/O request does not involve a section of the shadow set currently involved in one of the subtransfers; and b. stalling the I/O request if the I/O request involves a section of said shadow set currently involved in one of the subtransfers, and implementing the I/O request when the subtransfer has completed.

In the preferred embodiment, a subtransfer that has not yet begun is stalled if it involves a section of the shadow set which is currently involved in an I/O request, the subtransfer being implemented when the I/O request has completed. Each of the hosts will transmit I/O requests to the shadow set first to the storage medium from which the data in the subtransfers is obtained (i.e., the "source"), and then to the storage medium to which the subtransfer is directed (i.e., the "target"), after the I/O request to the source has completed. The command received from the host processor is received by a processor that supports the target. The processor that supports the target transmits commands to a processor that supports the source, the commands controlling the subtransfers of data from the source to the target.

The invention allows data to be transferred between two storage media, such as storage media in a shadow set of storage media in an efficient manner that does not significantly interfere with I/O requests.

Other advantages and features of the invention will be apparent from the following detailed description of the invention and the appended claims.

### Description of the Preferred Embodiments

### Drawings

We first briefly describe the drawings.

Fig. 1 is a shadow set storage system according to the present invention.

Figs. 2-4 illustrate data structures employed by the invention.

Fig. 5 is a flow chart illustrating a preferred embodiment of a method of copying data according to the invention.

### Structure and Operation

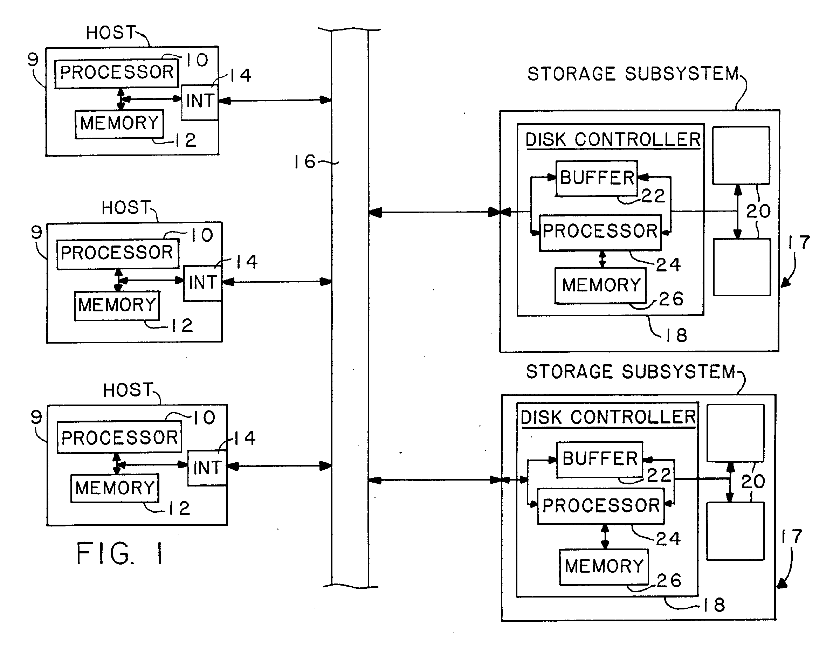

Referring to Fig. 1, a system in accordance with the invention includes a plurality of hosts 9, each of which includes a processor 10, memory 12 (including buffer storage) and a communications interface 14. The hosts 9 are each directly connected through interface 14 and a communications medium 16 (e.g., by a virtual circuit) to two or more storage subsystems, illustrated generally at 17 (two are shown in Fig. 1).

Each storage subsystem includes a disk controller 18, that controls I/O requests to one or more disks 20, two of which are shown in each subsystem. Disk controller 18 includes a buffer 22, a processor 24 and memory 26 (e.g., volatile memory). Processor 24 receives I/O requests from hosts 9 and controls I/O requests to each of its disks 20. Buffer 22 temporarily stores data received in connection with a write command before the data is written to a disk 20. Buffer 22 also stores data read from a disk 20 before the data is transmitted to the host in response to a read command.

Each host 9 will store, in its memory 12, a table that includes information about the system that the hosts 9 need to perform many operations. For example, hosts 9 will perform read and write operations to storage subsystems 17 and must know which storage subsystems are available for use, what disks are stored in the subsystems, etc. As will be described in greater detail below, the hosts 9 will slightly alter the procedure for read and write operations if data is being transferred from one shadow set member to another. Therefore, the table will store status information regarding any ongoing operations. The table also contains other standard information.

While each storage subsystem may include multiple disks 20, the members of the shadow set are chosen to include disks in different storage subsystems 17. Therefore, a host may directly access each member of the shadow set, through its interface 14 and over communication medium 16, without requiring it to access two shadow set members through the same disk controller 18. This will avoid a "central point of failure" in the event of a failure of one of the disk controllers 18. In other words, if members of a shadow set have a common disk controller 18, and if that controller 18 malfunctions, the hosts will not be able to successfully perform any read and write operations. In the preferred system, the shadow set members are "distributed", so that the failure of one device (e.g., one disk controller 18) will not inhibit read and write operations because they can be performed using another shadow set member accessed through another disk controller.

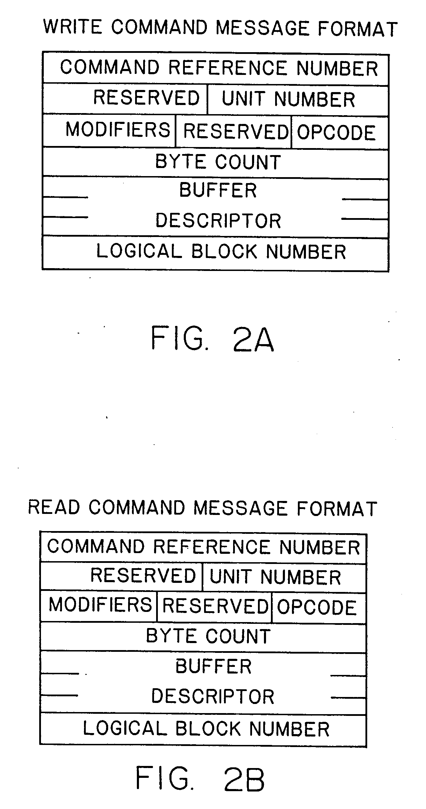

When data is written to the shadow set by a host, the host issues a command whose format is illustrated in Fig. 2A. The command includes a "command reference number" field that uniquely identifies the command, and a "unit number" field that identifies the unit (e.g. the disk 20) to which data is to be written to or read from within each shadow set disk. The "opcode" field identifies to the disk controller that the operation is a write operation. The "byte count" field specifies the total number of bytes of data to be written and the "logical block number" field identifies the starting location on the disk. The "buffer descriptor" identifies a section of host memory 12 that contains the data to be written. The "modifier" field is used to identify options associated with specific commands.

The format of a read command is illustrated in Fig. 2B, and includes fields that are similar to the write command fields. For a read command, the buffer descriptor contains the location in host memory 12 to which the data read from the disk is to be stored.

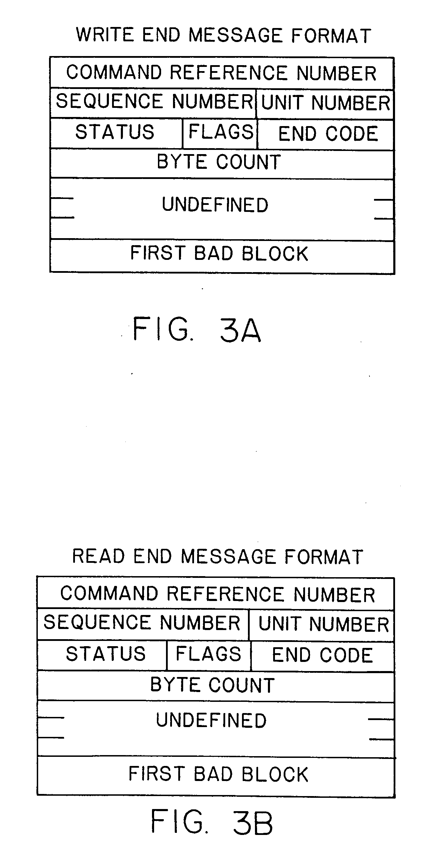

Once a host transmits a read or write command, it is received by the disk controller 18 that supports the disk identified in the "unit number" field. For a write command, the disk controller will implement the write to its disk 20 and return an "end message" to the originating host, the format of the write command end message being illustrated in Fig. 3A. The end message includes a status field that informs the host whether or not the command competed successfully. If the write failed the status field can include error information, depending on the nature of the failure. For a read command, the disk controller will read the requested data from its disk and transmit the data to memory 12 of the originating host. After the data has been transferred, an end message is generated by the disk controller and sent to the originating host, the format of the read command end message being illustrated in Fig. 3B. The read command end message is similar to the end message for the write command.

One of the system's host processors will control operations for adding a new disk to the shadow set. The system can select and host processor to execute the operation. For example, the host processor with the best transmission path (e.g., the fastest path) to the shadow set may be chosen.

The host controlling the addition of the new disk to the shadow set will select a currently active disk 20 to serve as a "source," with all of the data on the source being copied to the new disk or "target." A connection, such as a virtual circuit, is established between the storage subsystems that support the source and the target disk , and the data is transferred directly from the source storage subsystem to the target subsystem.

To begin the data transfer, a host sends a command to the disk controller supporting the target disk specifying the identity of the source and the address of the data to be transferred. The target disk then establishes a connection with the disk controller supporting the source and instructs the source's disk controller to transmit the data from the source.

A host implements the direct transfer using a "Copy Data" command. This command permits quantities of data to be copied from one disk device to another without host intervention. A disk controller may support two different types of copy operations; local and remote. A local copy operation involves the transfer of data between two disks that are both physically connected to the storage subsystem in which the disk controller that received the command is located (i.e., both disks are supported by the same disk controller). A remote copy operation involves the transfer of data between disks in different storage subsystems. Both storage subsystems in a remote copy operation must be connected to the same communications medium, i.e., they must be able to communicate with each other. As noted above, it is preferable to have the disks of the shadow set in different storage subsystems, so remote copy operations are used in the preferred system.

We will first describe the commands used to perform the direct copy operation and will then explain how a direct copy operation is implemented using the commands.

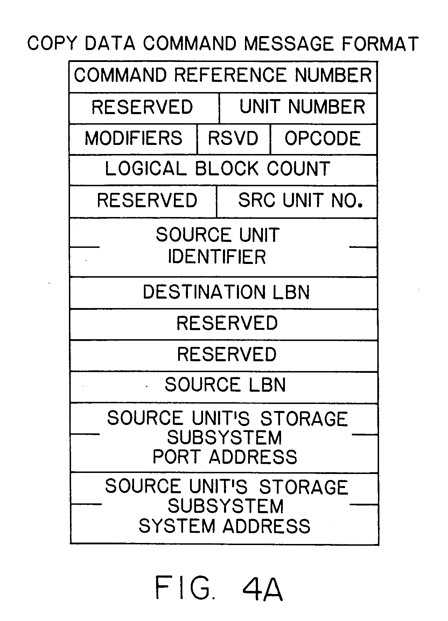

As noted above, to begin the operation, a host sends a "Copy Data" command to the disk controller that supports the target disk. The command message format for this command is illustrated in Fig. 4A.

The "unit number" field identifies the target unit -- i.e., the specific disk 20 to which data is to be copied. The "logical block count" field identifies the total number of logical blocks to be copied from the source disk to the target disk.

The "src unit number" field identifies the source unit -- i.e., the disk from which data is to be copied. The source lbn" field identifies the logical block number (position) on the source disk's volume at which the copy operation is to start. If this value does not actually reflect a block on the source disk, the disk controller rejects the command as an invalid command.

The "destination lbn" field identifies the logical block number (position) on the destination or target disk's volume at which the copy operation is to start. If this value does not actually represent a block on the target disk, the disk controller rejects the command as an invalid command.

The "source unit identifier" field specifies a unique identifier assigned to the source disk that is obtained from the source disk by the host before the host issues any copy data commands. The target disk controller compares the value of this field against the "unit identifier" it obtains directly from the source disk. If the values do not match exactly, the controller rejects the command as an invalid command.

The "source unit's storage subsystem port address" identifies the communication protocol port address of the storage subsystem to which the source disk is physically connected. The information encoded in this field is the port address formatted as required by the particular communications protocol being used. The target disk controller ignores this field if either of the following conditions exist:
1. The target disk controller does not provide remote copy support -- i.e., only local copy is supported; or
2. The target disk controller supports remote copy operations but the "Local Source Unit" modifier (explained below) is set. (i.e., the field is ignored as unnecessary if the source disk is local).

For a remote disk copy operation, the target disk controller rejects the command as an invalid command if the content of the source disk's storage subsystem port address field:
1. Is not formatted correctly for the communications protocol being used; or
2. Identifies the subsystem in which the target disk is located. (i.e., a remote copy operation cannot identify a local disk as the source).

The "source unit's storage subsystem system address" is the communications protocol system address of the storage subsystem to which the source disk is physically connected. The information encoded in this field is the system address value formatted as required by the communications protocol being used. Like the port address field described above, the target disk controller ignores this field if either the target disk controller does not provide remote copy support, or if the Local Source Unit modifier is set. If the content of this field is not formatted correctly for the communications protocol being used, the controller rejects the command as invalid.

There are a number of possible modifiers that may be specified in the "modifiers" field. An "establish communications path" modifier, if set, will instruct the target disk controller to establish a communication path to the source disk through the source disk controller.

The target disk controller rejects the Copy Data command as an invalid command if either of the following conditions exist:
1. The "establish communications paths" modifier is clear and the required communications paths have not been established.
2. The "establish communications paths" modifier is set and communications paths previously established on behalf of the issuing host are still intact.

For a disk controller that supports remote copy, the setting of a "Local Source Unit" modifier indicates that the source disk is a disk connected to the same disk controller as the target disk. Hosts clear this modifier to indicate that the source disk is located in another storage subsystem. This modifier is ignored by controllers that only support local copy operations.

The setting of the "Retain Communications Paths" modifier determines whether the disk controller should retain the communications paths after the copy operation has been aborted, completed, or terminated. If this modifier is set, the communications paths are retained. A host may therefore issue subsequent Copy Data commands without incurring the overhead associated with establishing the communications paths. If this modifier is clear, the target controller performs the operations necessary to disconnect the communications paths upon completion of the request.

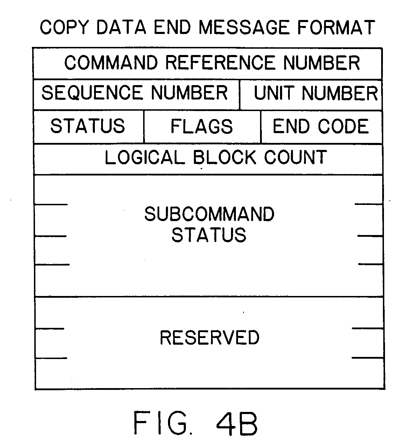

The end message format for the Copy Data command is illustrated in Fig. 4(b). The end message is returned to the host that issued the Copy Data command by the target disk controller after the Copy Data command is executed.

There are several possible flags that may be used in the "flags" field of the Copy Data end message including a "Communications Paths Retained" flag. The setting of this flag indicates whether the communications paths have been retained. If this end flag is set, the communications paths have been retained. If this flag is clear, the communications paths have been disconnected.

The "logical block count" field gives the number of logical blocks successfully copied from the source disk to the target disk. If an unrecoverable error occurs, the target controller sets this value equal to the number of logical blocks beginning with the "destination lbn" that were successfully copied to the target disk prior to the occurrence of the unrecoverable error. If no unrecoverable errors occur during the copy operation, the disk controller sets this value equal to the exact "logical block count" that was specified in the command message.

The "subcommand status" field contains information related to the failure of a subcommand issued by the disk controller to the source disk or the target disk. The contents of this field are undefined unless this command was terminated due to an error. If the command was terminated due to an error, the "Destination" (i.e., target) or "Source" bit flag (contained in the status field) identifies which device encountered the condition or error. In cases where multiple conditions or errors have occurred, either on one or both devices, the controller only records and reports the first condition or error detected, all others being discarded.

The purpose of the "subcommand status" field is to provide hosts with information to aid in recovering from failures that occur during the copy operation.

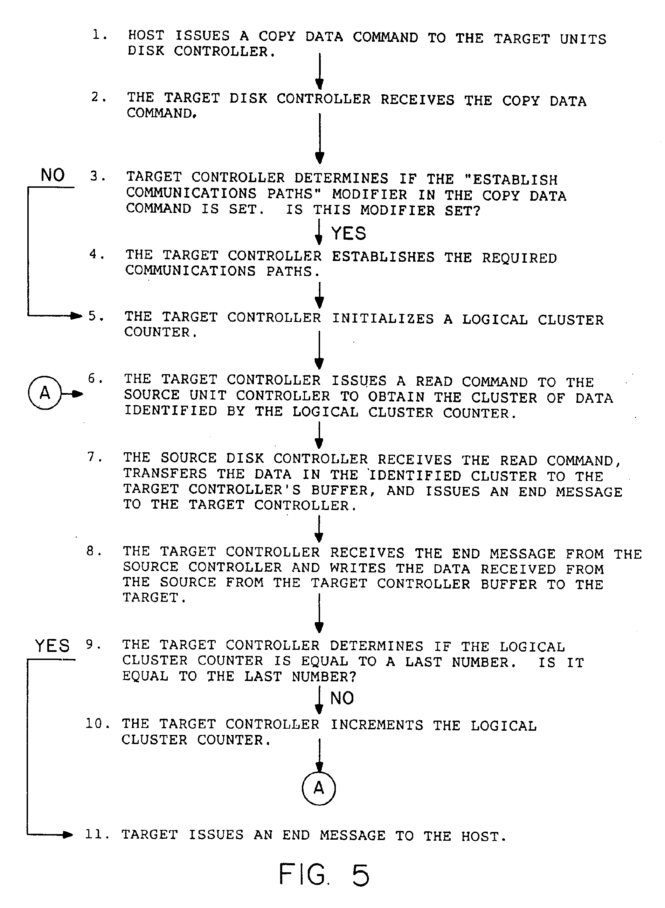

Now that the commands and data structures used in performing the copy operation have been described, the method of copying data from a source to a target will be explained, with reference to the flowchart of Fig. 5. The host controlling the copy operation first issues a Copy Data command to the target disk controller, specifying the disks that are to act as the source and target, the starting logical block numbers on the source and target, and the quantity of data to be copied from the source to the target (step 1). The target disk controller receives the command (step 2), and determines if the Establish Communications Paths modifier is set (step 3). If the Establish Communication Paths modifiers is set, the target disk controller proceeds to establish the required paths (step 4). If the source disk is located in the same storage subsystem as the target, the target controller uses internal connections to both the source and target disks. If the source disk is located in a remote subsystem, the target controller performs the communications protocol dependent operations necessary to establish a connection with the source disk's disk controller.

The target disk controller then initializes a logical cluster counter that identifies clusters of data in the source, beginning with the first cluster to be transferred (step 5). As explained below, the logical cluster counter is incremented to identify consecutive clusters to be transferred to the target and a last logical cluster number identifies the last cluster to be transferred.

The target controller next issues a Read command (see Fig. 2B) to the source disk to obtain a cluster of data identified by the logical cluster counter from the source (step 6).

Once the data is obtained from the source, the target controller issues a Write command to the target disk to copy the source data.

Steps 6-10 are repeated until the copy operation is aborted, completed, or terminated.

The target disk controller is described above as issuing read and write commands to the source and target disks of the type shown in Fig. 2. It should be noted that the disk controller is expressly permitted to perform any equivalent internal operation for the target disk and a local source disk to reduce processing overhead. Standard commands must be used in all transactions dealing with a remote source disk and its disk controller. However, if an internal operation is substituted for standard commands, the following rules are followed:
A. The result of the internal operation shall be identical to that of the standard command.
B. If the internal operation results in an error, the end message error fields are set as if a standard command had been issued.

The disk controller shall execute the Copy Data command in a manner that guarantees that logical blocks are copied to the proper place in the target disk, beginning with the logical block number specified in the "destination lbn" field of the Copy Data command message.

In order to permit write operations to the shadow set continue during the execution of a Copy Data command, some operations are performed by the target disk controller as "sequential operations" while others are performed as "non-sequential." A sequential operation to a disk is one that must be performed without any other operations being performed simultaneously. When a sequential command is received, the disk controller will complete all outstanding operations to the disk, and will inhibit new operations. When all outstanding operations have executed, the sequential operation is carried out to its completion. Once the sequential operation is completed, other operations may resume. Non-sequential commands may occur in parallel, and may be reordered to increase efficiency.

The target disk controller executes most commands relating to a Copy Data command as non-sequential commands -- i.e., in relation to all other commands addressed to the target disk, the subcommands the target disk controller issues to the target disk as part of the Copy Data Command may be reordered to optimize performance, and may be interleaved with other non-sequential commands.

The only exception to the non-sequential execution just described is that access to the disk controller's "immediate target" on the target disk is controlled. The disk controller's immediate target is the range of logical blocks on the target disk that the disk controller is about to act upon or is currently acting upon. To be more specific the "immediate target" is the range of logical blocks specified in:
A. a Read subcommand used to obtain a cluster of source data, or
B. a Write subcommand used to copy the resultant data to the target disk. Access to the disk controller's "immediate target" on the target disk is controlled according to the following rules:
   a. If a command (such as a write) that specifies a range of logical blocks that is within or overlaps the disk controller's "immediate target" is currently in progress, the disk controller postpones issuing any subcommands that affect the "immediate target" until the command in progress completes, terminates, or is aborted.
   b. If a command that specifies a range of logical blocks that is within or overlaps the disk controller's "immediate target" is received while the disk controller action on the "immediate target" is postponed (as described in "a" above), the disk controller postpones the execution of the command received until the subcommands that affect the "immediate target" have been initiated and have then completed or terminated.
   c. If a command that specifies a range of logical blocks that is within or overlaps the disk controller's "immediate target" is received while the subcommands that affect the "immediate target" are currently in progress, the disk controller postpones the execution of the command (i.e., stalls the command) until the subcommands that affect the "immediate target" have been completed or terminated.

The effect of these rules is to treat access to the disk controller's "immediate target" as sequential operations. In order to postpone I/O operations as discussed above, the disk controller will store the I/O requests in a queue in an available memory, such as buffer 22. When the subtransfer for that section of the shadow set is complete, the controller accesses the queue and implements the I/O requests.

As described above, the purpose for providing the "immediate target" access behavior described above is to allow hosts to perform write operations on the target disk in a manner that guarantees that while a Copy Data command is in progress all data written to logical blocks on the target disk will be identical to those contained on the source disk. To fulfil that guarantee, hosts shall ensure that write operations address to the source disk that specify a range of logical blocks that is within or overlaps the range of logical blocks specified in a Copy Data command are issued and completed before the equivalent operation is issued to the target disk. This is required since, if a host issues write commands to both the target and source in parallel, the write to the target could execute before the write to the source. If this occurred and the system then performed a subtransfer to the same location on the target disk, while stalling the write to the source disk, obsolete data would be transferred from the source to the target (i.e., the data on the source is obsolete because the write to the source has not yet executed. This potential corruption of data is avoided by requiring the hosts to first complete writes to the source before issuing writes to the target.

As explained above, each host stores a table that lists data that the host needs to operate properly in the system. For example, each table will include information regarding the disks that make up the shadow set, etc. The table also stores status information that informs the host whether or not a new member is being added to the shadow set. Therefore, before a host executes an I/O request to the shadow set it will check the status field in its table, and if the host determines that a new member is being added, the host will implement the special procedures discussed above for avoiding possible data corruption. The table is kept current by requiring hosts that begin the process of adding a new member, to send a message to every other host in the system, informing each host of the operation. A host that is controlling the addition of the new member will not begin the data transfer to the new member until it receives a confirmation from each host that each host has updated its table to reflect the new status of the system. Similarly, a host controlling the addition of a new member will send a message to each host when the new member has been added, and has data that is consistent with the shadow set. Upon receiving this message, hosts will resume the normal practice of issuing I/O requests in parallel.

Note that the result of a read operation issued to the target disk that specifies a range of logical blocks that is within or overlaps the range of logical blocks specified in a Copy Data command is unpredictable because data may not yet have been copied to the section of the target specified in the read command. Hosts should therefore rely solely on the contents of the source disk (or another active shadow set member) for read operations.

## Claims

1. A method of transferring data between two storage media (20) in a shadow set of storage media accessible by one or more host processors (10) for I/O requests, said method comprising the steps of:
A. receiving a command from one of said host processors (10), said command specifying data to be transferred from a first said storage medium (20) to a second said storage medium (20);
B. transferring said data specified in said command from said first storage medium to said second storage medium in a series of subtransfers, each of said subtransfers transferring a portion of said specified data; and
C. processing one or more I/O requests received from said host processors for access to said shadow set by, for each received I/O request:
a. implementing said I/O request if said I/O request does not involve a section of said shadow set currently involved in one of said subtransfers; and
b. stalling said I/O request if said I/O request involves a section of said shadow set currently involved in one of said subtransfers, and implementing said I/O request when said one of said subtransfers has completed.

2. The method of claim 1 further comprising stalling a said subtransfer that has not yet begun if said subtransfer involves a section of said shadow set which is currently involved in one of said I/O requests, and implementing said subtransfer when said one of said I/O requests has completed.

3. The method of claim 1 further comprising causing each of said host processors (10) to transmit each said I/O request first to said first storage medium (20) and, after said I/O request to said first storage medium has completed, then to said second storage medium (20).

4. The method of claim 1 further comprising said command from said one of said host processors (10) by a first processor (24) that manages access to said second storage medium (20).

5. The method of claim 4 further comprising causing said first processor (24) that manages access to said second storage medium (20) to transmit second commands to a second processor (24) that manages access to said first storage medium (20), said second commands controlling said substranfers.

6. The method of claim 5 wherein said second commands sent from said first processor (24) that manages access to said second storage medium (20) to said second processor (24) that manages access to said first storage medium (20) specify an address in said first storage medium of said data to be transferred.

7. The method of claim 1 wherein each of said storage media (20) is accessible by a plurality of host processors (10).

8. The method of claim 7 further comprising allowing said plurality of host processors (10) to simultaneously access one or more of said storage media (20).

9. The method of claim 1 further comprising causing each of said host processors (10) to maintain a table including information relating to said data transfer.

10. The method of claim 1 wherein each of said storage media (20) is supported by a processor (24) that manages access thereto, and further comprising controlling said subtransfers with said processors (24).

11. The method of claim 10 wherein each of said storage media (20) is supported by a different processor (24).

12. The method of claim 1 wherein said storage media are disk storage devices (20).

13. The method of claim 1, wherein said first storage medium (20) and said second storage medium (20) respectively comprise second and first processors (24), and wherein said step of transferring includes the substeps of:
(a) issuing a second command from said first processor (10) to said second processor (10); and
(b) transmitting said data from said first storage media (20) to said second storage media (20) in accordance with said second command.

14. The method of claim 1 further including the step of:
when said transferring step is occurring, causing each of said host processors to transmit each said I/O request first to said first storage medium (20) and, after said I/O request to said first storage medium has completed, then to said second storage medium (20), and thereafter allowing said host processors (10) to transmit each said I/O request to said first storage medium and said second storage medium in any order.

15. An apparatus for transferring data between two storage media (20) in a shadow set of storage media accessible by one or more host processors (10) for I/O requests, said apparatus comprising :
a first processor for receiving a command from one of said host processors (10), said command specifying data to be transferred from a first said storage medium (20) to a second said storage medium (20);
first means, responsive to said first processor, for transferring said data specified in said command from said first storage medium to said second storage medium in a series of subtransfers, each of said subtransfers transferring a portion of said specified data; and
second means for processing one or more I/O requests received from said host processors for access to said shadow set wherein, for each received I/O request, said second means :
a. implements said I/O request if said I/O request does not involve a section of said shadow set currently involved in one of said subtransfers; and
b. stalls said I/O request if said I/O request involves a section of said shadow set currently involved in one of said subtransfers, and implementing said I/O request when said one of said subtransfers has completed.

16. The apparatus of claim 15 wherein said first processor (24) manages access to said second storage medium.

17. The apparatus of claim 15 further comprising a second processor (24) that manages access to said first storage medium (20), and operative to receive second commands from said first processor (24) that manages access to said second storage medium.

18. The apparatus of claim 17 wherein said second processor (24) that manages access to said first storage medium (20) is operative to control said series of subtransfers in response to said second commands.

19. The apparatus of claim 17 wherein said second commands received by said second processor (24) from said first processor (24) specify an address in said first storage medium of said data to be transferred.

20. The apparatus of claim 15 wherein said first means for transferring stalls a said substranfer that has not yet begun if said subtransfer involves a section of said shadow set of storage media which is currently involved in one of said I/O request, said first means for transferring implementing said subtransfer when said one of said I/O request has completed.

21. The apparatus of claim 15 wherein each of said host processors (10) includes third means for sending each said I/O request first to said first storage medium (20) and, after said I/O request to said first storage medium has completed then to said second storage medium (20).

22. The apparatus of claim 15 wherein each of said storage media (20) is accessible by a plurality of said host processors (10).

23. The apparatus of claim 22 wherein said plurality of host processors (10) can simultaneously access one or more of said storage media (20).

24. The apparatus of claim 15 wherein each of said host processors (10) maintains a table including information relating to said data transfer.

25. The apparatus of claim 15 wherein said storage media are disk storage devices (20).

26. The apparatus of claim 15 or any one of claims 19, 21, 22, 23 or 24 further including:
a second processor (24) that manages access to said first storage medium and operative to receive a second command from said first processor; and
fourth means controlled by said first processor and said second processor for transferring said specified data from said first storage medium (20) to said second storage medium (20) in accordance with said second command.

## Patentansprüche

1. Verfahren zur Übertragung von Daten zwischen zwei Speichermedien (20) in einem Schattensatz (shadow set) von Speichermedien, auf die von einem oder mehr Hostprozessoren (10) für I/O-Anforderungen zugegriffen werden kann, wobei das Verfahren die folgenden Schritte umfaßt:
A. Empfangen eines Befehls von einem der Hostprozessoren (10), wobei der Befehl die Daten kennzeichnet, die von dem ersten Speichermedium (20) auf das zweite Speichermedium (20) übertragen werden sollen;
B. Übertragen der in dem Befehl gekennzeichneten Daten vom ersten Speichermedium auf das zweite Speichermedium in einer Reihe von Teilübertragungen, wobei bei jeder Teilübertragung ein Abschnitt der gekennzeichneten Daten übertragen wird; und
C. Verarbeiten einer oder mehrerer vom Hostprozessor empfangenen I/O-Anforderungen für den Zugriff auf den Schattensatz, dadurch daß für jede empfangene I/O-Anforderung:
a. die I/O-Anforderung durchgeführt wird, wenn die I/O-Anforderung keinen gegenwärtig mit einer der Teilübertragungen beschäftigten Bereich eines Schattensatzes betrifft; und
b. die I/O-Anforderung verzögert wird, wenn die I/O-Anforderung einen gegenwärtig mit einer der Teilübertragungen beschäftigten Bereich des Schattensatzes betrifft, und die I/O-Anforderung durchgeführt wird, wenn diese eine Teilübertragung abgeschlossen ist.

2. Verfahren nach Anspruch 1, das weiterhin das Verzögern einer noch nicht begonnenen Teilübertragung umfaßt, wenn die Teilübertragung einen gegenwärtig mit einer der I/O-Anforderungen beschäftigten Bereich des Schattenspeichers betrifft, sowie das Ausführen der Teilübertragung, wenn diese eine I/O-Anforderung abgeschlossen ist.

3. Verfahren nach Anspruch 1, das des weiteren bewirkt, daß jeder der Hostprozessoren (10) jede I/O-Anforderung zuerst an das erste Speichermedium (20) überträgt und dann, nachdem die I/O-Anforderung an das erste Speichermedium abgeschlossen ist, an das zweite Speichermedium (20) überträgt.

4. Verfahren nach Anspruch 1, das weiterhin das Empfangen des Befehls von dem einen Hostprozessoren (10) durch einen ersten Prozessor (24) umfaßt, der den Zugriff auf das zweiten Speichermedium (20) verwaltet.

5. Verfahren nach Anspruch 4, das des weiteren bewirkt, daß der erste, den Zugriff auf das zweite Speichermedium (20) verwaltende Prozessor (24) zweite Befehle zu einem zweiten Prozessor (24) überträgt, der den Zugriff auf das erste Speichermedium (20) verwaltet, wobei die zweiten Befehle die Teilübertragungen steuern.

6. Verfahren nach Anspruch 5, wobei die zweiten Befehle, die vom ersten, den Zugriff an das zweite Speichermedium (20) verwaltenden Prozessor (24) zum zweiten, den Zugriff auf das erste Speichermedium (20) verwaltenden Prozessor (24) gesendet wurden, eine Adresse der zu übertragenden Daten im ersten Speichermedium spezifizieren.

7. Verfahren nach Anspruch 1, wobei auf jedes der Speichermedien (20) von einer Vielzahl von Hostprozessoren (20) zugegriffen werden kann.

8. Verfahren nach Anspruch 7, das weiterhin den Schritt umfaßt, daß die Vielzahl von Hostprozessoren (10) gleichzeitig auf ein oder mehrere Speichermedien (20) zugreifen kann.

9. Verfahren nach Anspruch 1, das des weiteren bewirkt, daß jeder Hostprozessor (10) eine Tabelle verwaltet, die den Datentransfer betreffende Informationen beinhaltet.

10. Verfahren nach Anspruch 1, wobei jedes Speichermedium (20) von einem den Zugriff darauf verwaltenden Prozessor (24) unterstützt ist und das weiterhin das Steuern der Teilübertragungen mit den Prozessoren (24) umfaßt.

11. Verfahren nach Anspruch 10, wobei jedes Speichermedium (20) von einem anderen Prozessor (24) unterstützt wird.

12. Verfahren nach Anspruch 1, wobei die Speichermedien Plattenspeichereinrichtungen (20) sind.

13. Verfahren nach Anspruch 1, wobei das erste Speichermedium (20) und das zweite Speichermedium (20) jeweils einen zweiten und ersten Prozessor (24) umfassen und wobei der Schritt der Übertragung folgende Unterschritte umfaßt:
(a) Ausgeben eines zweiten Befehls vom ersten Prozessor (10) an den zweiten Prozessor (10); und
(b) Übertragen der Daten vom ersten Speichermedium (20) auf das zweite Speichermedium (20) in Übereinstimmung mit dem zweiten Befehl.

14. Verfahren nach Anspruch 1, das weiterhin folgenden Schritt umfaßt:
Bewirken, wenn der Übertragungsschritt auftritt, daß jeder der Hostprozessoren jede I/O-Anforderung zuerst an das erste Speichermedium (20) überträgt und dann, nachdem die I/O-Anforderung an das erste Speichermedium abgeschlossen ist, an das zweite Speichermdium (20) überträgt, und daß danach die Hostprozessoren (10) eine jede I/O-Anforderung zum ersten Speichermedium und zweiten Speichermedium unabhängig von der Reihenfolge übertragen können.

15. Einrichtung zur Datenübertragung zwischen zwei Speichermedien (20) in einem Schattensatz von Speichermedien, auf die von einem oder mehr Hostprozessoren (10) für I/O-Anforderungen zugegriffen werden kann, wobei die Einrichtung folgendes umfaßt:
einen ersten Prozessor zum Empfangen eines Befehls von einem der Hostprozessoren (10), wobei der Befehl die von einem ersten Speichermedium (20) auf ein zweites Speichermedium (20) zu übertragenden Daten kennzeichnet;
eine erste Einrichtung, die auf den ersten Prozessor reagiert, zum Übertragen der in dem Befehl gekennzeichneten Daten von dem ersten Speichermedium auf das zweite Speichermedium in einer Reihe von Teilübertragungen, wobei bei jeder der Teilübertragungen ein Abschnitt der gekennzeichneten Daten übertragen wird; und
eine zweite Einrichtung zum Verarbeiten einer oder mehrerer vom Hostprozessor empfangenen I/O-Anforderungen für den Zugriff auf den Schattensatz, wobei für jede empfangene I/O-Anforderung die zweite Einrichtung:
a. die I/O-Anforderung ausführt, wenn die I/O-Anforderung keinen Abschnitt des gegenwärtig mit einer der Teilübertragungen beschäftigten Schattensatzes betrifft; und
b. die I/O-Anforderung verzögert, wenn die I/O-Anforderung einen Abschnitt des gegenwärtig mit einer der Teilübertragungen beschäftigten Schattensatzes betrifft, und die I/O-Anforderung durchführt, wenn diese eine Teilübertragung abgeschlossen ist.

16. Einrichtung nach Anspruch 15, wobei der erste Prozessor (24) den Zugriff auf das zweite Speichermedium verwaltet.

17. Einrichtung nach Anspruch 15, die des weiteren einen zweiten Prozessor (24) umfaßt, der den Zugriff auf das erste Speichermedium (20) verwaltet und so arbeitet, daß er zweite Befehle vom ersten, den Zugriff auf das zweite Speichermedium verwaltenden Prozessor (24) empfängt.

18. Einrichtung nach Anspruch 17, wobei der zweite, den Zugriff auf das erste Speichermedium (20) verwaltende Prozessor (24) so arbeitet, daß er die Reihe von Teilübertragungen in Reaktion auf die zweiten Befehle steuert.

19. Einrichtung nach Anspruch 17, wobei die Befehle, die der zweite Prozessor (24) vom ersten Prozessor (24) empfangen hat, eine Adresse der zu übertragenden Daten in dem ersten Speichermedium spezifizeren.

20. Einrichtung nach Anspruch 15, wobei die erste Übertragungseinrichtung eine noch nicht begonnene Teilübertragung verzögert, wenn die Teilübertragung einen gegenwärtig mit einer der I/O-Anforderungen beschäftigten Abschnitt des Schattensatzes der Speichermedien betrifft, und die erste Übertragungseinrichtung die Teilübertragung durchführt, wenn diese eine I/O-Anforderung abgeschlossen ist.

21. Einrichtung nach Anspruch 15, wobei jeder Hostprozessor (10) eine dritte Einrichtung zum Senden einer jeden I/O-Anforderung zunächst an das erste Speichermedium (20) und danach, nachdem die I/O-Anforderung an das erste Speichermedium abgeschlossen ist, an das zweite Speichermedium (20) umfaßt.

22. Einrichtung nach Anspruch 15, wobei eine Vielzahl der Hostprozessoren (10) auf jedes des Speichermedien (20) zugreifen können.

23. Einrichtung nach Anspruch 22, wobei die Vielzahl von Hostprozessoren (10) gleichzeitig auf ein oder mehr Speichermedien (20) zugreifen können.

24. Einrichtung nach Anspruch 15, wobei jeder Hostprozessor (10) eine Tabelle verwaltet, die den Datentransfer betreffende Informationen beinhaltet.

25. Einrichtung nach Anspruch 15, wobei die Speichermedien Plattenspeichereinrichtungen (20) sind.

26. Einrichtung nach Anspruch 15 oder einem der Ansprüche 19, 21, 22, 23 bzw. 24, die des weiteren folgendes umfaßt:
einen zweiten Prozessor (24), der den Zugriff auf das erste Speichermedium verwaltet und so arbeitet, daß er einen zweiten Befehl vom ersten Prozessor empfängt; und
eine vierte Einrichtung, die vom ersten und vom zweiten Prozessor gesteuert wird, zur Übertragung der gekennzeichneten Daten vom ersten Speichermedium (20) auf das zweite Speichermedium (20) in Übereinstimmung mit dem zweiten Befehl.

## Revendications

1. Procédé de transfert de données entre deux supports d'informations (20) dans un ensemble miroir de supports d'informations accessibles à un ou plusieurs processeurs hôtes (10) en vue de demandes d'entrée/sortie, ledit procédé comportant les étapes consistant:
A. à recevoir une commande en provenance de l'un desdits processeurs hôtes (10), ladite commande spécifiant des données à transférer d'un premier dit support d'informations (20) à un second dit support d'informations (20);
B. à transférer lesdites données spécifiées dans ladite commande dudit premier support d'informations audit second support d'informations en une série de sous-transferts, chacun desdits sous-transferts transférant une partie desdites données spécifiées; et
C. à traiter une ou plusieurs demandes d'entrée/sortie reçues desdits processeurs hôtes en vue d'accéder audit ensemble miroir en exécutant les opérations suivantes pour chaque demande d'entrée/sortie:
a. la mise en application de ladite demande d'entrée/sortie si ladite demande d'entrée/sortie ne concerne pas une section dudit ensemble miroir couramment impliquée dans l'un desdits sous-transferts; et
b. le blocage de ladite demande d'entrée/sortie si ladite demande d'entrée/sortie concerne une section dudit ensemble miroir couramment impliquée dans l'un desdits sous-transferts, et la mise en application de ladite demande d'entrée/sortie lorsque ledit sous-transfert est terminé.

2. Procédé selon la revendication 1, consistant, en outre, à bloquer un dit sous-transfert qui n'a pas encore commencé si ledit sous-transfert concerne une section dudit ensemble miroir qui est couramment impliquée dans l'une desdites demandes d'entrée/sortie, et à mettre en application ledit sous-transfert lorsque ladite demande d'entrée/sortie est terminée.

3. Procédé selon la revendication 1, consistant, en outre, à faire transmettre chaque dite demande d'entrée/sortie par chacun desdits processeurs hôtes (10), d'abord audit premier support d'informations (20) et, une fois terminée ladite demande d'entrée/sortie transmise audit premier support d'informations, ensuite audit second support d'informations (20).

4. Procédé selon la revendication 1 comportant, en outre, la réception de ladite commande en provenance dudit processeur hôte (10) par un premier processeur (24) qui gère l'accès audit second support d'informations (20).

5. Procédé selon la revendication 4, consistant, en outre, à faire transmettre, par ledit premier processeur (24) qui gère l'accès audit second support d'informations (20), des secondes commandes à un second processeur (24) qui gère l'accès audit premier support d'informations (20), lesdites secondes commandes commandant lesdits sous-transferts.

6. Procédé selon la revendication 5, dans lequel lesdites secondes commandes, envoyées par ledit premier processeur (24) qui gère l'accès audit second support d'informations (20) audit second processeur (24) qui gère l'accès audit premier support d'informations (20), spécifient une adresse, contenue dans ledit premier support d'informations, desdites données à transférer.

7. Procédé selon la revendication 1, dans lequel chacun desdits supports d'informations (20) est accessible à une multiplicité de processeurs hôtes (10).

8. Procédé selon la revendication 7, consistant, en outre, à permettre à ladite multiplicité de processeurs hôtes (10) d'accéder simultanément à un ou à plusieurs desdits supports d'informations (20).

9. Procédé selon la revendication 1 consistant, en outre, à faire maintenir par chacun desdits processeurs hôtes (10) une table contenant des informations relatives audit transfert de données.

10. Procédé selon la revendication 1, dans lequel chacun desdits supports d'informations (20) est pris en charge par un processeur (24) qui gère l'accès audit support, et consistant, en outre, à commander lesdits sous-transferts avec lesdits processeurs (24).

11. Procédé selon la revendication 10, dans lequel chacun desdits supports d'informations (20) est pris en charge par un processeur différent (24).

12. Procédé selon la revendication 1, dans lequel lesdits supports d'informations sont des dispositifs de stockage sur disque (20).

13. Procédé selon la revendication 1, dans lequel ledit premier support d'informations (20) et ledit second support d'informations (20) comportent respectivement des second et premier processeurs (24), et dans lequel ladite étape de transfert comprend les sous-étapes comportant:
(a) l'émission d'une seconde commande par ledit premier processeur (10) audit second processeur (10); et
(b) la transmission desdites données dudit premier support d'informations (20) audit second support d'informations (20) conformément à ladite seconde commande.

14. Procédé selon la revendication 1, comportant, en outre, l'étape consistant:
lorsque ladite étape de transfert est en cours, à faire transmettre par chacun desdits processeurs hôtes chaque dite demande d'entrée/sortie, d'abord audit premier support d'informations et, une fois terminée ladite demande d'entrée/sortie transmise audit premier support d'informations, puis audit second support d'informations (20) et à permettre ensuite auxdits processeurs hôtes (10) de transmettre chaque dite demande d'entrée/sortie audit premier support d'informations et audit second support d'informations, dans n'importe quel ordre.

15. Appareil pour transférer des données entre deux supports d'informations (20) dans un ensemble miroir de supports d'informations accessibles à un ou plusieurs processeurs hôtes (10) en vue de demandes d'entrée/sortie, ledit appareil comportant:
un premier processeur pour recevoir une commande en provenance de l'un desdits processeurs hôtes (10), ladite commande spécifiant des données à transférer d'un premier dit support d'informations (20) à un second dit support d'informations (20);
des premiers moyens, agissant en réponse audit premier processeur pour transférer lesdites données spécifiées dans ladite commande dudit premier support d'informations audit second support d'informations en une série de sous-transferts, chacun desdits sous-transferts transférant une partie desdites données spécifiées; et
des seconds moyens pour traiter une ou plusieurs demandes d'entrée/sortie reçues desdits processeurs hôtes en vue d'accéder audit ensemble miroir dans lesquels, pour chaque demande d'entrée/sortie reçue, lesdits seconds moyens
a. mettent en application ladite demande d'entrée/sortie si ladite demande d'entrée/sortie ne concerne pas une section dudit ensemble miroir couramment impliquée dans l'un desdits sous-transferts; et
b. bloquent ladite demande d'entrée/sortie si ladite demande d'entrée/sortie concerne une section dudit ensemble miroir couramment impliquée dans l'un desdits sous-transferts, et mettent en application ladite demande d'entrée/sortie lorsque ledit sous-transfert est terminé.

16. Appareil selon la revendication 15, dans lequel ledit premier processeur (24) gère l'accès audit second support d'informations.

17. Appareil selon la revendication 15, comportant en outre un second processeur (24) qui gère l'accès audit premier support d'informations (20), et qui est apte à recevoir des secondes commandes en provenance dudit premier processeur (24) qui gère l'accès audit second support d'informations.

18. Appareil selon la revendication 17, dans lequel ledit second processeur (24) qui gère l'accès audit premier support d'informations (20) est apte à commander ladite série de sous-transferts en réponse auxdites secondes commandes.

19. Appareil selon la revendication 17, dans lequel lesdites secondes commandes reçues par ledit second processeur (24) à partir dudit premier processeur (24) spécifient une adresse, contenue dans ledit premier support d'informations, desdites données à transférer.

20. Appareil selon la revendication 15, dans lequel ledits premiers moyens pour transférer bloquent un second sous-transfert qui n'a pas encore commencé si ledit sous-transfert concerne une section dudit ensemble miroir de supports d'informations qui est couramment impliquée dans une desdites demandes d'entrée/sortie, ledits premiers moyens pour transférer mettant en application ledit sous-transfert lorsque ladite demande d'entrée/sortie est terminée.

21. Appareil selon la revendication 15, dans lequel chacun desdits processeurs hôtes (10) comprend des troisièmes moyens pour envoyer chaque dite demande d'entrée/sortie d'abord audit premier support d'informations (20) et, une fois terminée la demande d'entrée/sortie envoyée audit premier support d'informations, ensuite audit second support d'informations (20).

22. Appareil selon la revendication 15, dans lequel chacun desdits supports d'informations (20) est accessible à une multiplicité desdits processeurs hôtes (10).

23. Appareil selon la revendication 22, dans lequel ladite multiplicité de processeurs hôtes (10) peut accéder simultanément à un ou à plusieurs desdits supports d'informations (20).

24. Appareil selon la revendication 15, dans lequel chacun desdits processeurs hôtes (10) maintient une table comprenant des informations relatives audit transfert de données.

25. Appareil selon la revendication 15, dans lequel lesdits supports d'informations sont des dispositifs de stockage sur disque (20).

26. Appareil selon la revendication 15, ou selon l'une quelconque des revendications 19, 21, 22, 23 ou 24, comportant, en outre:
un second processeur (24) qui gère l'accès audit premier support d'informations et qui est apte à recevoir une seconde commande en provenance dudit premier processeur; et
des quatrièmes moyens commandés par ledit premier processeur et ledit second processeur pour transférer lesdites données spécifiées dudit premier support d'informations (20) audit second support d'informations (20) conformément à ladite seconde commande.
